Europäisches Patentamt

European Patent Office

Office européen des brevets

(19)

(11) Veröffentlichungsnummer: **0 657 865 A1**

## (12) EUROPÄISCHE PATENTANMELDUNG

(21) Anmeldenummer: **94119157.9**

(22) Anmeldetag: **05.12.94**

(51) Int. Cl.6: **G09G 5/02**, H04N 1/64

(30) Priorität: **09.12.93 DE 4342019**

(43) Veröffentlichungstag der Anmeldung:
**14.06.95 Patentblatt 95/24**

(84) Benannte Vertragsstaaten:
**AT BE CH DE ES FR GB IT LI NL SE**

(71) Anmelder: **Alcatel SEL Aktiengesellschaft
Lorenzstrasse 10
D-70435 Stuttgart (DE)**

(84) **DE**

(71) Anmelder: **ALCATEL N.V.
Strawinskylaan 341,
(World Trade Center)
NL-1077 XX Amsterdam (NL)**

(84) **BE CH ES FR GB IT LI NL SE AT**

(72) Erfinder: **Tolmie, Jeffrey Charles
Weltzienstrasse 25
D-76135 Karlsruhe (DE)**

(74) Vertreter: **Knecht, Ulrich Karl et al
Alcatel SEL AG,
Patent- und Lizenzwesen,
Postfach 30 09 29
D-70449 Stuttgart (DE)**

(54) **Verfahren zur Umsetzung eines n-Bit-Farbbildsignals in ein m-Bit-Farbbildsignal.**

(57) Die Erfindung betrifft ein Verfahren zur Umsetzung eines n-Bit-Farbbildsignals in ein m-Bit-Farbbildsignal mit möglichst hoher Farbechtheit, insbesondere für eine Ansteuerung eines m-Bit-Farbdisplays (n > m).

Dazu ist vorgesehen, daß aus einem vom n-Bit-Farbbildsignal definierten ersten Farbraum eine der Bitanzahl des m-Bit-Farbbildsignals entsprechende Anzahl von Farben in Abhängigkeit von der Häufigkeit ihres Auftretens in dem ersten Farbraum ausgewählt wird und daß eine Farbabweichung gegenüber einer durch das n-Bit-Farbbildsignal definierten Farbe dadurch vermindert oder kompensiert wird, daß eine benachbarte Farbe der ausgewählten Farben ausgewählt wird.

EP 0 657 865 A1

Die Erfindung betrifft ein Verfahren zur Umsetzung eines n-Bit-Farbbildsignals in ein m-Bit-Farbbildsignal mit möglichst hoher Farbechtheit, insbesondere für eine Artsteuerung eines m-Bit-Farbdisplays, wobei das n-Bit-Farbbildsignal gegenüber dem m-Bit-Farbbildsignal eine größere Bitanzahl aufweist (n > m).

Es ist bekannt, mit hochqualitativer Aufnahmetechnik Farbbilder aufzunehmen und diese dann zu Übertragungs- und/oder Speicherzwecken in digitale Signale umzuwandeln. Hierbei werden zur Erzeugung einer hohen Farbechtheit die Bilder in n-Bit-Farbbildsignale umgewandelt. So können beispielsweise mit einem 24-Bit-Farbbildsignal gleichzeitig ca. 16 Millionen verschiedene Farben übertragen werden. Hierbei ist jedoch üblich, daß bei einer Vielzahl von Anwendungen, beispielsweise bei der Darstellung von Farbbildern auf Multi-Media-Terminals aus Kostengründen nur Farbdisplays zur Verfügung stehen, die beispielsweise über ein m-Bit-Farbbildsignal angesteuert werden können. So können bei 8-Bit-Farbdisplays lediglich $2^8 = 256$ Farben angesteuert und damit wiedergegeben werden. Es ist bereits vorgeschlagen worden, das n-Bit-Farbbildsignal in ein m-Bit-Farbbildsignal mit Hilfe eines sogenannten Farbwürfels umzuwandeln. Hierbei werden eine entsprechend dem m-Bit-Farbbildsignal ansteuerbare Anzahl von Farben aus dem n-Bit-Farbbildsignal ausgewählt und diese optimiert, das heißt der Farbinformation des n-Bit-Farbbildsignals angeglichen. Eine auftretende Farbabweichung bei der Wiedergabe der Farbe mit dem m-Bit-Farbbildsignal in einem bestimmten Pixel des Displays wird dabei mit einem festen Anteil auf die vier benachbarten Pixel verteilt, so daß die Farbabweichung über das gesamte Bild ausgebreitet wird. Hierbei ist jedoch nachteilig, daß durch die Optimierung einerseits keine dem hochqualitativen Farbbild entsprechende Anpassung erfolgen kann und andererseits diese Optimierung lediglich für einzelne Standbilder möglich ist. Somit kann eine gleichzeitige Darstellung mehrerer farbechter Bilder auf einem Display nicht erfolgen. Darüber hinaus ist eine farbechte Wiedergabe eines durch ein n-Bit-Farbbildsignal definierten Videosignals nicht möglich.

Der Erfindung liegt daher die Angabe zugrunde, ein Verfahren der gattungsgemäßen Art zu schaffen, mit dem ein durch ein n-Bit-Farbbildsignal definiertes Farbbild mit großer Farbechtheit auf einem m-Bit-Farbdisplay darstellbar ist.

Erfindungsgemäß wird diese Aufgabe dadurch gelöst, daß aus einem vom n-Bit-Farbbildsignal definierten ersten Farbraum eine der Bitanzahl des m-Bit-Farbbildsignals entsprechende Anzahl von Farben in Abhängigkeit von der Häufigkeit ihres Auftretens in dem ersten Farbraum ausgewählt wird und daß eine Farbabweichung gegenüber einer durch das n-Bit-Farbbildsignal definierten Farbe dadurch vermindert oder kompensiert wird, daß eine benachbarte Farbe der ausgewählten Farbe ausgewählt wird. Hierdurch wird es sehr vorteilhaft möglich, auf lediglich zur Ansteuerung durch ein m-Bit-Farbbildsignal geeigneten Displays Farbbilder in einer solchen Farbechtheit darzustellen, die annähernd der eines n-Bit-Farbbildsignals entsprechen. Insbesondere wird durch die Beachtung und Kompensation der Farbabweichungen bei der Auswahl der darzustellenden Farben erreicht, daß die Farbabweichungen benachbarter Farben so aufeinander abgestimmt sind, daß für einen Betrachter des Displays eine Farbabweichung zu dem ursprünglichen, das heißt durch das n-Bit-Farbbildsignal definierten Farbbild, nicht erkennbar ist.

Weitere vorteilhafte Ausgestaltungen ergeben sich aus den übrigen in den Unteransprüchen genannten Merkmalen.

Die Erfindung wird nachfolgend in einem Ausführungsbeispiel erläutert.

Mit einer Aufnahmekamera, beispielsweise einer Videokamera, werden fortlaufend Farbbilder aufgenommen. Die Farbbilder werden dabei am Aufnahmeort in elektronische Impulse gewandelt und über eine Farbbildübertragungsstrecke einer Empfangseinheit zugeführt. Die Empfangseinheit besitzt dabei beispielsweise ein Display. In der Empfangseinheit werden die elektronischen Impulse wiederum in Bildsignale umgewandelt und die mit der Aufnahmekamera aufgenommenen Bilder auf dem Display projiziert. Eine solche Gerätekonfiguration ist beispielsweise bei einer Bildtelefonanwendung denkbar.

In der Aufnahmekamera werden die optischen Bildsignale in ein 24-Bit-Farbbildsignal gewandelt und dieses wird über die Übertragungsstrecke zu der Empfangseinheit übertragen. Da das in der Empfangseinheit angeordnete Display beispielsweise als ein 8-Bit-Farbdisplay ausgebildet ist, muß der Inhalt des 24-Bit-Farbbildsignals auf ein 8-Bit-Farbbildsignal transformiert werden, damit über dieses das 8-Bit-Farbdisplay angesteuert werden kann. Somit wird klar, daß mit 24-Bit-Farbbildsignalen ca. 16 Millionen, genauer $2^{24}$, verschiedene Farben übertragen werden können, während lediglich $2^8 = 256$ verschiedene Farben auf dem 8-Bit-Farbdisplay angesteuert werden. Das Display weist dabei eine bestimmte Anzahl benachbarter Pixel auf, die jeweils mit einer der 256 verschiedenen Farben angesteuert werden können, so daß sich insgesamt ein Farbbild ergibt, das sich aus den unterschiedlichen angesteuerten Pixel zusammensetzt.

Die Umsetzung des 24-Bit-Farbbildsignals geschieht folgendermaßen.

Da das über die Aufnahmekamera aufgenommene Farbbild die möglichen zu übertragenden ca.

16 Millionen Farben in der Regel nicht aufweist und die verwendeten Farben nicht gleichmäßig über den ganzen zur Verfügung stehenden Farbraum verteilt sind, ist es möglich, hieraus die Farben auszuwählen, die innerhalb des zur Verfügung stehenden Farbraums am häufigsten verwendet werden. Hierdurch wird ein erster Farbraum, der durch das 24-Bit-Farbbildsignal definiert wird, in einen zweiten Farbraum aufgeteilt, der sich durch räumliche rote, grüne und blaue Komponenten definieren läßt, wobei in jeder Raumrichtung 16 Zellen vorhanden sind. Hierdurch wird eine Auflösung des 24-Bit-Farbbildsignals geliefert, die folgendermaßen definiert ist.

Die Farbdefinition entspricht:

$$16 \times 16 \times 16 = 4096 \text{ Farben}$$
$$= 2^4 \times 2^4 \times 2^4$$
$$= 2^{12}$$
$$= 12 \text{ Bits.}$$

Aus diesen nunmehr durch ein 12-Bit-Farbbildsignal definierten $2^{12} = 4096$ verschiedenen Farben werden die 256 am häufigsten verwendete Farben, die jeweils durch eine Zelle in einem zweiten Farbraum gekennzeichnet sind, ausgewählt. Die unterschiedlichen Farben entstehen dadurch, daß jeder Zelle des Farbraums eine unterschiedliche rote, grüne und blaue Komponente zugeordnet ist, die in ihrer Überlagerung die verschiedenen Farben bilden. Wird nun das 24-Bit-Farbbildsignal in die 256 ausgewählten Zellen, das heißt Farben des zweiten Farbraums, plaziert, ergibt sich zwischen den tatsächlichen durch das 24-Bit-Farbbildsignal definierten und der ausgewählten Farbe eine Farbabweichung. Diese Farbabweichung kann sich sowohl aus der roten, der grünen und der blauen Komponente oder auch nur aus einer oder zwei dieser Komponenten zusammensetzten. Damit nun das mit den 256 ausgewählten Farben angesteuerte 8-Bit-Farbdisplay ein möglichst farbechtes Bild in Vergleich zu dem 24-Bit-Farbbildsignal liefert, muß die entstandene Farbabweichung bei der Auswahl der Farbe für ein Nachbarpixel auf dem Display berücksichtigt werden. Die Berücksichtigung der Farbabweichung erfolgt dahingehend, daß eine eventuelle Abweichung der roten und/oder grünen und/oder blauen Komponente bei dem Nachbarpixel dadurch ausgeglichen wird, daß hier möglicherweise nicht die am nächsten kommende ausgewählte Farbe zu dem 24-Bit-Farbbildsignal ausgewählt wird, sondern eine weiter entfernt liegende Farbe, die jedoch die Farbabweichung aus dem Nachbarpixel kompensiert. Dadurch, daß der Betrachter des Displays benachbarte Pixel nicht unterscheiden kann und sie gleichzeitig wahrnimmt, kann durch eine entsprechende Auswahl der dargestellten Farben eine solche Überlagerung erzielt werden, die den Eindruck entstehen läßt, daß hier die ursprüngliche Originalfarbe zu sehen ist. Durch eine fortgesetzte Verteilung der Farbabweichungen immer jeweils auf ein oder mehrere Nachbarpixel wird ein Gesamtbild erreicht, das obwohl es als 24-Bit-Farbbildsignal geliefert wird und nur als 8-Bit-Farbbildsignal das Farbdisplay ansteuert, eine hohe Farbechtheit gegenüber dem ursprünglich mit der Aufnahmekamera aufgenommenen Originalbild aufweist. Werden die Farbabweichungen mehrerer benachbarter Pixel bei der Auswahl der Farbe eines Pixels aus dem zweiten Farbraum berücksichtigt, kann eine Wichtung der Farbabweichungsgrade erfolgen, so daß verschiedene Farbabweichungen eventuell gar nicht oder nur eingeschränkt berücksichtigt werden.

**Patentansprüche**

1. Verfahren zur Umsetzung eines n-Bit-Farbbildsignals in ein m-Bit-Farbbildsignal mit möglichst hoher Farbechtheit,
   **dadurch gekennzeichnet,** daß aus einem vom n-Bit-Farbbildsignal definierter erster Farbraum eine der Bitanzahl des m-Bit-Farbbildsignals entsprechende Anzahl von Farben in Abhängigkeit von der Häufigkeit ihres Auftretens in dem Farbraum ausgewählt wird und daß eine Farbabweichung gegenüber einer durch das n-Bit-Farbbildsignal definierten Farbe dadurch reduziert oder kompensiert wird, daß eine benachbarte Farbe der ausgewählten Farben ausgewählt wird.

2. Verfahren nach Anspruch 1, dadurch gekennzeichnet, daß die ausgewählten Farben derart gefunden werden, daß eine bestimmte Anzahl von roten und eine bestimmte Anzahl von grünen und eine bestimmte Anzahl von blauen Farben gewählt werden.

3. Verfahren nach Anspruch 1 oder 2, dadurch gekennzeichnet, daß aus einem durch die ausgewählten grünen, blauen und roten Farben gebildeten zweiten Farbraum eine bestimmte Anzahl von Farben ausgewählt wird, die der Anzahl des m-Bit-Farbbildsignals entspricht.

4. Verfahren nach Anspruch 1, dadurch gekennzeichnet, daß zu jeder aus dem zweiten Farbraum ausgewählten Farbe ein Farbabweichungsgrad zu der durch das n-Bit-Farbbildsignal definierten Farbe ermittelt wird.

5. Verfahren nach Anspruch 4, dadurch gekennzeichnet, daß der Farbabweichungsgrad bei einer ersten ausgewählten Farbe bei der Auswahl einer zweiten durch das m-Bit-Farbbildsignal benachbarten darstellbaren Farbe berücksichtigt wird.

6. Verfahren nach einem der Anspruch 4 oder 5, dadurch gekennzeichnet, daß bei der Auswahl der benachbarten Farbe ein Farbabweichungsgrad berücksichtigt wird, der den Farbabweichungsgrad der ersten Farbe möglichst kompensiert.

7. Verfahren nach einem der Anspruch 4 bis 6, dadurch gekennzeichnet, daß die Farbabweichungsgrade mehrerer benachbarter Farben bei der Auswahl der zweiten Farbe berücksichtigt werden.

8. Verfahren nach einem der Ansprüche 4 bis 7, dadurch gekennzeichnet, daß der Farbabweichungsgrad der ersten ausgewählten Farbe auf mehrere benachbarte ausgewählten Farben verteilt wird.

9. Verfahren nach einem der Ansprüche 4 bis 8, dadurch gekennzeichnet, daß die Farbabweichungsgrade mehrerer benachbarter Farben nach Wichtung ihrer Bedeutung für das n-Bit-Farbbildsignal berücksichtigt werden.

10. Verfahren nach einem der Ansprüche 1 bis 9, dadurch gekennzeichnet, daß das n-Bit-Farbbildsignal ein 24-Bit-Farbbildsignal ist und daß das n-Bit-Farbbildsignal ein 8-Bit-Farbbildsignal ist.

11. Verfahren nach Anspruch 3, dadurch gekennzeichnet, daß der zweite Farbraum durch ein 12-Bit-Farbbildsignal bestimmt wird.

Europäisches
Patentamt

**EUROPÄISCHER RECHERCHENBERICHT**

Nummer der Anmeldung

EP 94 11 9157

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | COMPUTERS AND GRAPHICS, Bd.15, Nr.4, 1991, OXFORD GB Seiten 561 - 567 S. S. DIXIT 'Quantization of color images for display/printing on limited color ouput devices.' | 1,4-10 | G09G5/02 H04N1/64 |
| Y | * das ganze Dokument * --- | 2,3 | |
| Y | SYSTEMS & COMPUTERS IN JAPAN, Bd.19, Nr.3, März 1988, NEW YORK US Seiten 64 - 71 T. WATANABE 'A fast algorithm for color image quantization using only 256 colors.' * das ganze Dokument * | 2,3 | |
| A | --- | | |
| X | SYSTEMS & COMPUTERS IN JAPAN, Bd.21, Nr.10, 1990, NEW YORK US Seiten 68 - 77 T. WATANABE 'Improved dithering methods for color quantized images' | 1,2,4-10 | |
| | | | **RECHERCHIERTE SACHGEBIETE (Int.Cl.6)** |
| A | * das ganze Dokument * --- | 2,11 | G09G H04N |
| A | EP-A-0 501 023 (INTERNATIONAL BUSINESS MACHINES CO.) * das ganze Dokument * ----- | 1-11 | |

Der vorliegende Recherchenbericht wurde für alle Patentansprüche erstellt

| Recherchenort | Abschlußdatum der Recherche | Prüfer |
|---|---|---|
| DEN HAAG | 6. April 1995 | Farricella, L |